# EUROPÄISCHE PATENTSCHRIFT

(11) **EP 2 058 049 B1**
(45) Veröffentlichungstag und Bekanntmachung des Hinweises auf die Patenterteilung: **01.03.2017**
(21) Anmeldenummer: 08017351.1
(22) Anmeldetag: 02.10.2008
(51) Int. Cl.: B01J 2/22, B01J 2/30

(54) **VERFAHREN ZUR HERSTELLUNG RIESELFÄHIGER ADDITIVE**
METHOD FOR PRODUCING FREE-FLOWING ADDITIVES
PROCÉDÉ DE FABRICATION D'ADDITIFS POUVANT COULER

(30) Priorität: 24.10.2007 DE 102007051115
(43) Veröffentlichungstag der Anmeldung: 13.05.2009
(73) Patentinhaber: Schmitt, Alexander, 67127 Rödersheim-Gronau (DE); Harréus, Frank, 69469 Weinheim (DE); Denzinger, Steffen, 55128 Mainz (DE)
(72) Erfinder: Denzinger, Steffen, 55128 Mainz (DE); Harréus, Frank, 69469 Weinheim (DE); Schmitt, Alexander, 67127 Rödersheim-Gronau (DE)
(74) Vertreter: Wüstefeld, Regine Marie

(56) Entgegenhaltungen:
- EP-A2- 0 719 824
- WO-A1-2004/022837
- DE-A1-102005 028 056

## Beschreibung

Die Erfindung betrifft ein Verfahren zur Herstellung rieselfähiger Additive sowie die damit erhältlichen Additive.

### STAND DER TECHNIK

Die Herstellung und Verwendung von Additiven wie etwa Hydrolyseschutzadditiven ist grundsätzlich bekannt. Insbesondere im Bereich der Polyester ist für sehr viele Einsatzzwecke eine Stabilisierung gegen Hydrolyse notwendig.

So wird in der US 6,069,204 eine Monofaser beschrieben, die aus einer Mischung von Polyester mit mehrwertigem Alkohol eines 1,4-Cyclohexandimethanols, einem Polyamid und einem Polyolefin gefertigt ist. Zur Stabilisierung gegen Hydrolyse kann u. a. Bis-(2,6-diisopropylphenyl)-carbodiimid zugesetzt werden.

Aus der EP 1 425 443 ist ebenfalls der Einsatz von Carbodiimide als Hydrolysestabilisator bekannt. Diese offenbart verzweigte Polyethylenterephthalatmonofasern beziehungsweise -filamente. Ein Aspekt der EP 1 425 443 ist darauf gerichtet, dass die kettenverzweigten Polyethylenterephthalate mit einer wirksamen Menge eines Hydrolysestabilisatoradditivs stabilisiert sind. Diese Hydrolysestabilisatoradditive reagieren chemisch mit den Carboxylsäure-Endgruppen.

Ein weiterer Hydrolysestabilisator wird in der JP 2006249152 A beschrieben. Es handelt sich hierbei um einen Stabilisator, der in einem Harz vorliegt, welches biologisch zersetzbar ist.

Ein weiterer Hydrolysestabilisator wird in der JP 2004277931 A erwähnt, es handelt sich ebenfalls um eine Carbodiimidverbindung, die mit den endständigen Carboxylgruppen einer Polymerfaser reagiert. In der GB 1 485 294 wird ebenfalls Bezug genommen auf Polyesterfilamente beziehungsweise auf ein Verfahren zu deren Herstellung, wobei es ebenfalls darauf ankommt, dass Hydrolysestabilität der Fasern gegeben ist, weswegen ein Carbodiimidstabilisator mit den Carboxylgruppen des Ausgangsharzes abreagieren gelassen wird.

Schließlich bezieht sich die WO 03/010370 ebenfalls auf stabilisierte Polyesterzusammensetzungen und Monofilamente, die daraus gefertigt werden und die hydrolysestabilisiert sind. Es handelt sich bei dem Stabilisator ebenfalls um ein monomeres oder polymeres Carbodiimid.

Grundsätzlich ist durch die WO 2004/022837 A1 außerdem ein Verfahren zum Aufhellen synthetischer Fasern und Kunststoffe mit granulierten optischen Aufhellern bekanntgeworden. Bei diesem Verfahren wird ein granulierter optischer Aufheller in synthetische Fasern oder Kunststoffe eingearbeitet. Der granulierte optische Aufheller wird erhalten, indem zunächst ein optischer Aufheller in Pulverform in einer Druckkompaktierungsmaschine unter einem Druck von 3 bis 50 kNewton/cm Rohrlänge kompaktiert und das so erhaltene Kompaktat anschließend zerkleinert wird. Dieses Verfahren zielt im wesentlichen darauf ab, eine Staubbildung zu meiden.

Besonders Carbodiimid-Stabilisatoren weisen demgegenüber den Nachteil auf, dass nach einiger Zeit der Lagerung ein Zusammenbacken des Produkts erfolgt, so dass die weitere Verarbeitung erheblich erschwert ist und die Qualität des Produkts beeinträchtigt ist. Zur Überwindung dieses Problems wurden Hilfsmittel zugefügt, wie z. B. Silicastaub (Aerosil®), was aber unerwünscht ist, da die Hilfsmittel damit auch in das Endprodukt gelangen.

### BESCHREIBUNG DER ERFINDUNG

Ausgehend von diesem Stand der Technik liegt der vorliegenden Erfindung die Aufgabe zugrunde, ein verbessertes Verfahren zur Bereitstellung rieselfähiger Additivverbindungen und rieselfähige Additivverbindungen zu schaffen.

Diese Aufgabe wird durch ein Verfahren gelöst, das die Schritte umfasst:
- Darstellen einer partikulären Additivverbindung,
- Lagern einer Masse der partikulären Additivverbindung mit einer Flächenpressung von zumindest 30 g/cm2 bis ein Verbacken der Masse der Additivverbindung erfolgt ist,
- Zerkleinern der verbackenen Masse der Additivverbindung zu einer zerkleinerten, partikulären Additivverbindung,
- Sieben der zerkleinerten partikulären Additivverbindung, wobei Partikel mit einer Größe von über 4,0 mm und Partikel mit einer Größe von unter 0,1 mm aus der zerkleinerten partikulären Additivverbindung abgetrennt werden, so dass eine langzeitstabile, rieselfähige Additivverbindung erhalten wird. Ferner wird die Aufgabe durch Schaffung einer rieselfähiger Additivverbindung gelöst, welche aus einer verbackenen, zerkleinerten und gesiebten Additivverbindung erhältlich ist.

Erfindungsgemäß wird vorzugsweise eine Masse von Additivpartikeln, die nach an sich bekannten Verfahren zunächst dargestellt wurden, für einen Zeitraum von 5 bis 30 Tagen, insbesondere von 7 bis 21 Tagen, unter einer Gewichtsbelastung gelagert, bis die Partikel verbacken. Die Lagerung erfolgt vorteilhaft unter Druck, da sich hierdurch die notwendige Lagerdauer verkürzt. Der aus diesen Partikeln entstandene verbackene Additiv-Kuchen wird dann einer Zerkleinerung unterzogen. Eine Zerkleinerung der in diesem Zeitraum gelagerten Partikel führt überraschenderweise zu Partikeln, die nach dem Aussieben von Kristallgrößen unter 0,1 mm und über 4 mm bei weiterer Lagerung erhalten bleiben, ohne erneut unlösbar zu verbacken.

Weitere Ausführungsbeispiele beziehen sich darauf, dass die nach der Lagerung zerkleinerten Kristalle mittels eines Siebverfahrens fraktioniert werden und die abgesiebten Fraktionen in das Verfahren zurückgeführt werden.

Eine noch weitere Ausführungsform des Verfahrens bezieht sich darauf, dass mittels Fraktionierung definierte Korngrößen bereitgestellt werden.
Die Erfindung bezieht sich ebenso auf eine Carbodiimidverbindung, wie sie durch ein Verfahren gemäß einem seiner weiter oben erwähnten Ausgestaltungen erhalten werden kann, die langzeitstabil und rieselfähig ist. Diese erfindungsgemäße Carbodiimidverbindung ist erhältlich aus einer partikulären Carbodiimidverbindung durch Lagerung der partikulären Carbodiimidverbindung in einer Masse, Zerkleinern der durch die Lagerung verbackenen Carbodiimidverbindung zu einer zerkleinerten partikulären Carbodiimidverbindung und Sieben der zerkleinerten partikulären Carbodiimidverbindung.

### KURZE BESCHREIBUNG DER FIGUREN

Weitere bevorzugte Ausgestaltungen, sowie einige der Vorteile, die mit diesen und weiteren Ausgestaltungen verbunden sind, werden durch die nachfolgende ausführliche Beschreibung deutlich und besser verständlich. Die Beschreibung wird dabei durch die Figuren gestützt.

**Fig. 1** zeigt Stabilisatorkristalle, die mit dem erfindungsgemäßen Verfahren erhalten wurden,
**Fig. 2** zeigt Stabilisatorkristalle, die mit einem Verfahren nach dem Stand der Technik erhalten wurden,
**Fig. 3** zeigt Stabilisatorkristalle, die mit dem erfindungsgemäßen Verfahren erhalten wurden,
**Fig. 4** zeigt Stabilisatorkristalle, die mit einem Verfahren nach dem Stand der Technik erhalten wurden,
**Fig. 5** zeigt Stabilisatorkristalle, die mit dem erfindungsgemäßen Verfahren erhalten wurden,
**Fig. 6** zeigt Stabilisatorkristalle, die mit einem Verfahren nach dem Stand der Technik erhalten wurden,
**Fig. 7** zeigt die Partikelgrößenverteilung eines Hydrolysestabilisators nach dem Stand der Technik,
**Fig. 8** zeigt die Partikelgrößenverteilung eines erfindungsgemäßen Hydrolysestabilisators.

### DETAILLIERTE BESCHREIBUNG

Das erfindungsgemäße Verfahren ermöglicht die Herstellung rieselfähiger Additivverbindungen. Es umfasst als ersten Schritt die Herstellung einer partikulären Additivverbindung. Diese Herstellung erfolgt in an sich bekannter Weise.

Die Herstellung der Carbodiimide erfolgt beispielsweise wie in DE 1156401 und EP 0609698 beschrieben. Danach werden für die Herstellung von beispielsweise Bis-(2,6-Diisopropylenphenyl)-carbodiimid folgende

Verfahrensschritte durchgeführt:
- Vorlegen von 2,6-Diisopropylphenylisocyanat in einem geeigneten Lösemittel, z. B. m-Xylol
- Zugabe eines geeigneten Katalysators, z. B. wie in US 2853473 beschrieben;
- Erhitzen und Bildung des Carbodiimids
- Abkühlen der Lösung
- Eintrag in ein Fällungsmittel und Kristallisation
- Abkühlen der Suspension
- Abtrennen des Feststoffs
- Trocknen.

Bei der Additiwerbindung handelt es sich um eine bei Raumtemperatur feste Carbodiimidverbindung, vorzugsweise ein alkyl-substituiertes Bis-arylcarbodiimid und insbesondere um Bis-(2,6-Diisopropylenphenyl)-carbodiimid. Besonders letztere Verbindung neigt dazu, wenn sie gefertigt ist, wie es im Stand der Technik gelehrt wird, nach kurzer Lagerdauer heftig zu verbacken, so dass die Partikel einen festen, verbackenen Kuchen bilden, der kaum mehr verarbeitbar ist. Unmittelbar nach der Herstellung ist das Produkt zwar rieselfähig, jedoch erfolgt bereits nach wenigen Tagen, in jedem Fall aber innerhalb einiger Wochen, ein so festes Verbacken, dass erhebliche Kräfte aufgewandt werden müssen, um den Kuchen zu zerkleinern, wobei aber die ursprünglichen Partikelgrößen nicht zurückerhalten werden. Diese nachteiligen Eigenschaften des Produktes führen dazu, dass die technische Anwendung durch Aufschmelzen des Feststoffes und aufwendige Flüssigdosierung erfolgt. Durch dieses Aufschmelzen aber verschlechtert sich die Produktqualität. Es bilden sich Isocyanate, was aus Gründen des Umwelt- und besondere des Arbeitsschutzes, gesonderte Maßnahmen bei der Anwendung notwendig machen.

Der weitere Schritt des erfindungsgemäßen Verfahrens umfasst das Lagern einer Masse der partikulären Additivverbindung unter einer Flächenpressung von zumindest 30 g/cm², bis ein Verbacken der Masse der Additivverbindung zu einem Additiv-Kuchen erfolgt ist. Unter Masse wird dabei eine größere Menge der Additivverbindung, üblicherweise von mindestens einigen hundert Gramm, verstanden. Das Verbacken erfolgte bei den bisherigen Herstellverfahren unvermeidlich im Laufe der Lagerung des Produktes. Typischerweise wird eine Masse an Partikeln bzw. Kristallen gelagert, die im Bereich von einigen hundert Gramm bis zu vielen Kilogramm, beispielsweise 10 bis 20 kg, liegt, wobei diese "Masse" vorteilhaft in Tüten oder Säcke gängiger Größen oder in übliche Big-Bags verpackt ist. Erfindungsgemäß ist es bevorzugt, bei der Lagerung einen Zutritt von Luft und besonders Feuchtigkeit weitgehend auszuschließen.

Vorteilhafterweise kann die verpackte Masse zwischen Platten oder Gewichte gelegt werden, um eine verbackene, platte Masse zu bilden. Die "platte verbackene Masse" entsteht je nach Gewichtsbelastung bzw. Druck während einer Lagerdauer von 5 Tagen bis 30 Tagen, bevorzugt von 7 bis 21 Tagen und ganz besonders bevorzugt von 10 bis 14 Tagen. Bei dieser Lagerzeit ist eine Flächenpressung von 30 g/cm² ausreichend, um den Prozess des Verbackens abzuschließen.

Danach wird die verbackene Masse zerkleinert. Dies kann z. B. durch Brechen und/oder Mahlen geschehen, selbstverständlich sind auch andere Verfahren denkbar. Durch das Zerkleinern der verbackenen Masse wird diese in eine zerkleinerte partikuläre Additivverbindung überführt.

Vorteilhaft werden dann noch, z. B. durch Sieben, Partikel mit einer Größe von über 4,0 mm, vorzugsweise über 3,0 mm, ganz besonders bevorzugt über 2,0 mm, und Partikel mit einer Größe von unter 0,1 mm, vorzugsweise unter 0,2 mm, abgetrennt. Natürlich kann die Abtrennung weitergeführt werden, bis Partikel mit nur einer oder mehreren festgelegten Korngrößen verbleiben. Damit verbleibt eine Fraktion oder verbleiben einstellbar mehrere Fraktionen von

Partikeln einer langzeitstabilen rieselfähigen Additivverbindung.

Die Partikelgrößenverteilung, die beispielsweise mit einem Mastersizer 2000 (Malvern Instruments) bei 4 bar Druck und einer Konzentration von 0,0012 Vol.-% bestimmt wird, sollte erfindungsgemäß wie folgt sein: d_{0,1} ≥ 6 µm, vorzugsweise ≥ 7 µm und/oder d_{0,5} ≥ 50 µm, vorzugsweise ≥ 60 µm, besonders bevorzugt ≥ 70 µm und/oder d_{0,9} ≥ 250 µm, bevorzugt ≥ 300 µm, ganz besonders bevorzugt ≥ 350 µm. Dabei ist vor allem eine Reduktion des Anteiles der feinen Partikel von Bedeutung, idealerweise sollten nicht mehr als 1,5 Vol.-% der Partikel eine Größe unter 5 µm aufweisen, vorzugsweise nicht mehr als 1,3 Vol.-%. Die Begrenzung nach oben ergibt sich aus praktischen Erwägungen: Wenn die Partikel zu groß werden, ist die Homogenisierung des Additivs im Polymer erschwert. Für das Verbacken ist die Obergrenze ohne Belang.

Die so gefertigten rieselfähigen Additivverbindungen bleiben zumindest 2 Monate, insbesondere mindestens 4 Monate und üblicherweise mindestens 6 Monate lagerbar, ohne erneut zu verbacken. Dies ist ferner möglich, ohne dass Hilfsmittel zugesetzt werden müssen, die vielfach nachteiligen Einfluss auf ein Produkt ausüben, in dem das Additiv eingesetzt wird.

Die oben beschriebene Lagerung kann vorzugsweise im Dunkeln geschehen und sollte unter Feuchtigkeitsausschluss erfolgen, ehe das gealterte Additiv gebrochen und zermahlen wird und die zuvor kompakt verbackte Ware in Partikel unterschiedlicher Größen zerkleinert wird, die sodann durch Sieben in Fraktionen aufgeteilt werden können.

Die abgesiebten Fraktionen werden vorzugsweise wieder in das Verfahren zurückgeführt. Dabei sollen die feinen Fraktionen, also Siebgröße unter 0,1 bzw. 0,2 mm, in den Lagerschritt und die groben Fraktionen, Siebgröße über 4 mm, bzw. über 3 mm bzw. über 2 mm, in den Zerkleinerungsschritt zurückgeführt werden.

Dabei ist für eine rieselfähige Additivverbindung gemäß der Erfindung wichtig, dass ein Absieben des Feinanteils erfolgt, wobei die dem Feinanteil zugehörigen Partikel eine Größe von unter 0,1 bzw. unter 0,2 mm aufweisen. Die dem Feinanteil zugehörigen Partikel können einen Gesamtanteil von etwa 30 % der Gesamtmenge an gebrochener Stabilisatorsubstanz ausmachen. Weiter ist es bevorzugt, dass die Grobanteile abgetrennt werden, wobei unter Grobanteilen Partikel mit Größen von über 4,0 mm bzw. über 3,0 mm bzw. über 2,0 mm zu verstehen sind. Der erhaltenen Fraktion werden vorzugsweise keine Hilfsmaterialien zugesetzt, was vorteilhaft ist, um die Qualität von Folgeprodukten zu erhalten.

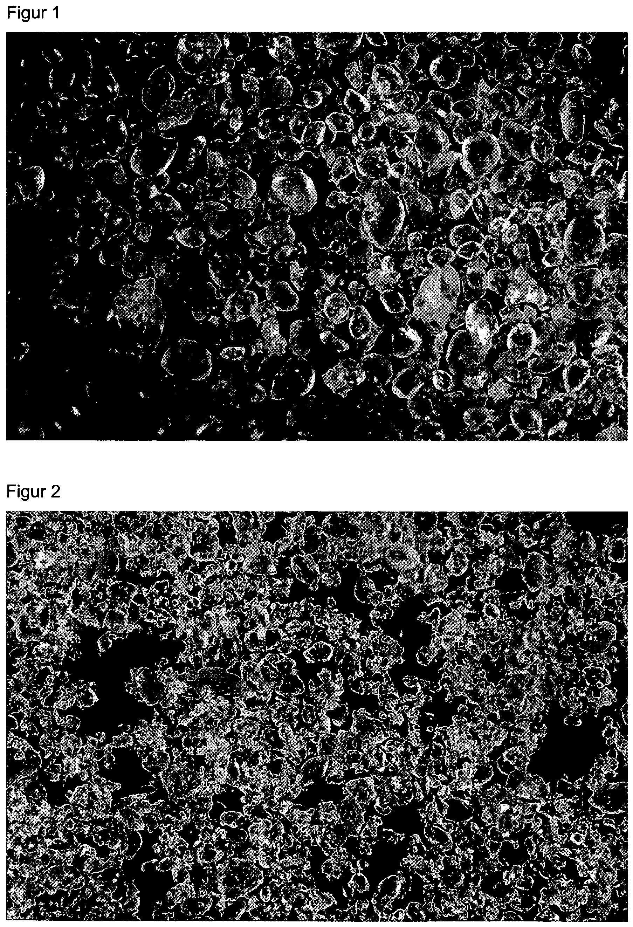

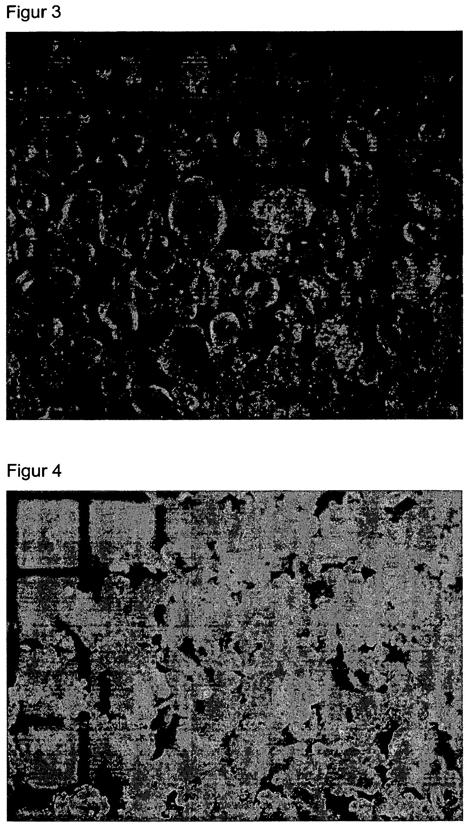

In den Figuren 1 bis 6 sind Mikroskopaufnahmen von Bis-(2,6-diisopropylphenyl)-carbodiimid gezeigt, wobei in Figuren 1, 3 und 5 erfindungsgemäß erhaltenes Produkt und in den Figuren 2, 4 und 6 herkömmliches Produkt nach der Herstellung und Lagerung aber ohne Zerkleinerung gezeigt ist. Man erkennt deutlich, dass die nach der Lagerung, zerkleinerten und gesiebten Partikel rundere Konturen erhalten, wobei die erfindungsgemäßen Partikel auch nicht aneinanderhaften.

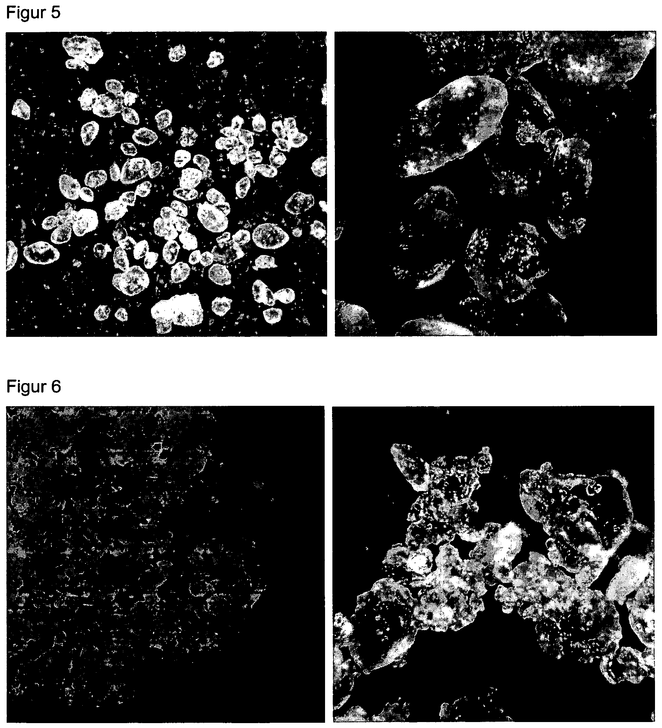

Die erfindungsgemäß durch Lagerung, Zerkleinerung und Siebung erhältlichen Additivpartikel können vorteilhaft ohne erneutes Verbacken in abgetrennten Fraktionen weiter gelagert werden. Das erfindungsgemäße Verfahren verzichtet vorteilhaft vollkommen auf den Einsatz von Hilfsmitteln, wie beispielsweise Aerosil®, so dass das Zusetzen des Stabilisators in weitere Prozesse ermöglicht wird, ohne die Qualität eines Folgeprodukts durch Hilfsmittelzusatz nachteilig zu beeinträchtigen. Der Verfahrensschritt des Zerbrechens nach definierter Alterungszeit von 7 bis 21 Tagen stellt Partikel mit einer Morphologie bereit, die in **Figur 5** besonders deutlich wird. Die Partikel sind an den Kanten abgerundet und weisen offensichtlich eine Oberflächenbeschaffenheit auf, die nicht dazu neigt, mit benachbarten Partikeln zu verbacken.

Die herkömmlichen Partikel verbacken dagegen, wie sich aus den Figuren 2, 4 und 6 ersehen lässt. Die Verbackungen lassen sich auch nicht ohne weiteres lösen, bereits nach zwei Wochen Lagerung ist mit der Hand aufgebrachte Kraft nicht mehr ausreichend, es muss Werkzeug zu Hilfe genommen werden. Die Zerkleinerung führt dabei zu Partikeln mit sehr unregelmäßiger Korngröße. Demgemäß wird auch im normalen Verarbeitungsprozess keine ausreichende Trennung der Verbackungen erreicht werden.

Die im erfindungsgemäßen Verfahren zerkleinerten Kristalle bleiben hingegen locker und rieselfähig und können daher auch nach längerer Lagerzeit in Folgeprozessen eingesetzt werden.

### Beispiele

### Beispiel 1

Laborversuche mit den erfindungsgemäßen Additiven, die in zwei Proben aufgeteilt wurden, ergaben Folgendes bezüglich der feinen Anteile von unter 0,2 mm Größe (Probe 2) und der gröberen Anteile mit über 0,2 mm Größe (Probe 1).

Für Probe 1 wurden 177,6 g eines gesiebten, körnigen, rieselfähigen Stabilisators 7000 (von Raschig GmbH), einem Carbodiimid, mit grober Körnung über 0,2 mm, in einen Plastikflachbeutel gegeben, und es wurde eine flache "Platte" von 14 cm x 11 cm geformt. Diese Probe wurde auf eine Kachel der Größe von 24 cm x 12 cm gelegt und mit einer weiteren Platte abgedeckt. Die zwischen den beiden Platten befindliche Probe wurde mit einer Masse beschwert. Probe 1 wurde auf eine Kachel von 1165 g gelegt, dann wurde die Probe mit einer Masse von 5095 g beschwert. Es ergab sich eine Flächenpressung von 40,6 g/cm². Die Probe wurde im Klimaschrank bei 40 °C und 75 % Luftfeuchtigkeit gelagert.

Nach einer Lagerdauer von 16 Tagen zeigte die Probe, die aus Material gefertigt wurde, welches nach einer 7-tägigen Alterungsdauer erfindungsgemäß zerkleinert und gesiebt wurde, ehe es zu der Platte geformt und beschwert wurde, nach Abnehmen der beschwerenden Masse Beweglichkeit und Rieselfähigkeit der einzelnen Partikel der Probe.

Eine weitere Lagerdauer von 21 Tagen, ebenfalls bei 40 °C und 75 % Luftfeuchtigkeit, führte ebenfalls nicht zu endgültigem Verbacken der Partikel, vielmehr ließen sich die Partikel des "Presslings" durch leichtes Bewegen und ohne Kraftaufwand wieder voneinander lösen, so dass der auf diese Weise gelagerte Stabilisator ohne Kraftaufwand in seine rieselfähige Konfiguration rücküberführbar war.

Als Probe 2 des Stabilisators 7000 mit einer Gesamtmasse von 122,8 g wurden die abgesiebten Feinanteile mit einer Größe unter 0,2 mm, die puderzuckerartig wirkten, genommen. Probe 2 wurde ebenfalls in einen Plastikflachbeutel gegeben und zu einer Platte mit identischer Größe wie Probe 1 geformt. Probe 2 wurde mit einer Masse von 4243 g beschwert und es ergab sich eine Flächenpressung von 35,1 g/cm². Die Probe wurde ebenfalls bei 40 °C und 75 % Luftfeuchtigkeit im Klimaschrank gelagert. Nach 16 Tagen war Probe 2 bereits vollkommen verbacken und wies ein Brechverhalten wie Keks auf, so dass keine definierten Korngrößen erhalten wurden. Eine weitere Lagerung von 21 Tagen führte zur Bildung einer Platte, die sich unter erheblicher Krafteinwirkung brechen ließ, jedoch keine rieselfähigen kristallinen Partikel mehr bildete. Eine starke dauerhafte Verbackung vieler benachbarter Partikel war entstanden, wobei das Verbacken einer nicht definierbaren Anzahl von Partikeln zu einem großen Partikel dazu führte, dass eine homogene Korngröße nach Zerkleinerung der endgültig verbackenen Platte erhältlich war.

Das Experiment zeigt, dass durch definierte Zerkleinerung nach einer definierten Alterungsphase, verbunden mit entsprechender Absiebung von Grob-und Kleinanteilen, der Stabilisator mit Partikeln bestimmter Korngröße erhalten wird und gelagert werden kann, ohne dass erneut ein dauerhaftes Verbacken auftritt, wie dies andernfalls bei Stabilisatoren, respektive Additiven, gleicher chemischer Zusammensetzung der Fall ist, die nicht nach der erfindungsgemäßen Alterungsdauer zerkleinert werden und die nach der Zerkleinerung nicht fraktioniert werden.

### Beispiel 2

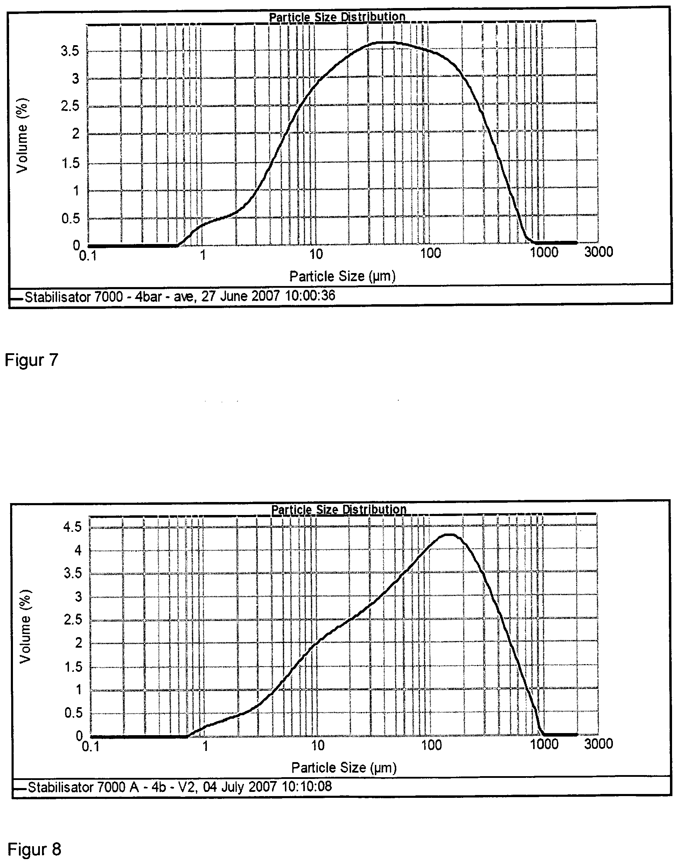

Stabilisator 7000 und nach dem erfindungsgemäßen Verfahren hergestellter Stabilisator 7000 A, bei dem Partikel mit einer Größe von unter 0,2 mm und über 2,0 mm abgesiebt worden sind, wurde mit Hilfe eines auf dem Prinzip der Laserbeugung beruhenden Partikelgrößenmessgerätes (Mastersizer 2000, Fa. Malvern Instruments) bei 4 bar Druck und einer Konzentration von 0,0012 Vol.-% untersucht. Es ergaben sich die in Figur 7 und 8 dargestellten Partikelgrößenverteilungen. Der Stabilisator 7000 nach dem Stand der Technik (Figur 7) hatte folgende Partikelgrößenverteilung: d_{0,5} = 40 µm, d_{0,9} = 247 µm und d_{0,1} = 5 µm. Bei dem erfindungsgemäßen Stabilisator 7000 A (Figur 8) ergab sich dagegen folgende Partikelgrößenverteilung d_{0,5} = 77 µm, d_{0,9} = 362 µm und d_{0,1} = 8 µm. Wesentlich ist hierbei, dass erfindungsgemäß die Partikelgrößenverteilung deutlich zu größeren Partikeln verschoben ist und insbesondere der Anteil an Partikeln kleiner 5 µm reduziert wird. Man erkennt, dass die Siebung zwar nicht sämtliche Partikel kleiner als 0,2 mm abtrennen konnte, jedoch die entsprechende Reduktion bereits ausreicht. Der Einfachheit halber wird im Rahmen der vorliegenden Erfindung eine Fraktion teilweise auch mit den aus dem Siebvorgang theoretisch resultierenden Korngrößen bezeichnet, wobei sich die "Größen" auf das Sieb und nicht auf die gemessene Partikelgröße beziehen.

### Beispiel 3

In einem weiteren Versuch wurde Stabilisator 7000 ohne vorherige Lagerung und Zerkleinerung direkt abgesiebt. Hierbei wurden Partikel mit einer Größe über 2,0 mm und Partikel mit einer Größe unter 0,2 mm abgetrennt. Für den Versuch wurden 200,0 g unbehandelter Stabilisator 7000 auf eine Siebkombination 2,0 mm und 0,2 mm aufgegeben und abgesiebt. Dabei wurden folgende Siebfraktionen erhalten:

| Fraktion | Menge | Massenanteil |
|---|---|---|
| größer 2,0 mm | 53,7 g | 26,9 % |
| 0,2 - 2,0 mm | 94,1 g | 47,1 % |
| kleiner 0,2 mm | 50,5 g | 25,2 % |

Es ergibt sich ein Siebverlust von 1,7 g oder 0,8 %. Die gewünschte Fraktion fällt im Gegensatz zum erfindungsgemäß erhaltenen Material deutlich kleiner aus.

Eine Probe von 50,0 g der Fraktion mit Partikeln von 0,2 mm bis 2,0 mm wurde in einen Plastikbeutel gegeben, und es wurde eine flache "Platte" von 10 cm x 10 cm geformt. Diese Probe wurde auf eine Kachel der Größe von 24 cm x 12 cm gelegt und mit einer weiteren Platte abgedeckt. Die zwischen den beiden Platten befindliche Probe wurde mit einer Masse von insgesamt 3564 g beschwert. Es ergab sich eine Flächenpressung von 35,6 g/cm². Die Probe wurde unter Umgebungsbedingungen gelagert.

Nach einer Lagerdauer von 10 Tagen zeigte die Probe nach Abnehmen der beschwerenden Masse noch Reste an Beweglichkeit und Rieselfähigkeit der einzelnen Partikel der Probe, jedoch ergab sich im Vergleich zu Probe 1 aus Beispiel 1 eine deutliche Verbackung.

## Patentansprüche

1. Verfahren zur Herstellung rieselfähiger Carbodiimidverbindungen, umfassend die Schritte:
- Darstellen einer partikulären Carbodiimidverbindung,
- Lagern einer Masse der partikulären Carbodiimidverbindung unter einer Flächenpressung von zumindest 30 g/cm², bis ein Verbacken der Masse der Carbodiimidverbindung erreicht ist,
- Zerkleinern der verbackenen Masse der Carbodiimidverbindung zu einer zerkleinerten, partikulären Carbodiimidverbindung,
- Sieben der zerkleinerten partikulären Carbodiimidverbindung, wobei Partikel mit einer Größe von über 4,0 mm und Partikel mit einer Größe von unter 0,1 mm aus der zerkleinerten partikulären Carbodiimidverbindung abgetrennt werden,
so dass eine Fraktion mit Partikeln einer langzeitstabilen rieselfähigen Carbodiimidverbindung erhalten wird.

2. Verfahren nach Anspruch 1, **dadurch gekennzeichnet, dass** die Lagerdauer 5 bis 30 Tage, vorzugsweise 7 bis 21 Tage und insbesondere 10 bis 14 Tage beträgt.

3. Verfahren nach Anspruch 1 oder 2, **dadurch gekennzeichnet, dass** die rieselfähigen Carbodiimidverbindungen Bis-(alkylphenyl)-carbodiimidverbindungen sind.

4. Verfahren nach Anspruch 3, **dadurch gekennzeichnet, dass** die Carbodiimidverbindung ein Bis-(2,6-Diisopropylenphenyl)-carbodiimid ist.

5. Verfahren nach einem der Ansprüche 1 bis 4, **dadurch gekennzeichnet, dass** Partikel mit einer Größe von über 3,0 mm, vorzugsweise über 2,0 mm und Partikel mit einer Größe von unter 0,2 mm aus der zerkleinerten partikulären Carbodiimidverbindung abgesiebt werden.

6. Verfahren nach einem der Ansprüche 1 bis 5, **dadurch gekennzeichnet, dass** das Sieben weitergeführt wird, bis Partikel mit einer oder mehreren Korngrößen verbleiben.

7. Verfahren nach einem der Ansprüche 1 bis 6, **dadurch gekennzeichnet, dass** die Partikel folgende Partikelgrößenverteilung (bestimmt mit Mastersizer 2000, Malvern Instruments, bei 4 bar Druck und einer Konzentration von 0,0012 Vol.-%) aufweisen: d_{0,1} ≥ 6 µm, vorzugsweise ≥ 7 µm und/oder d_{0,5} ≥ 50 µm, vorzugsweise ≥ 60 µm und besonders bevorzugt ≥ 70 µm und/oder d_{0,9} ≥ 250 µm, bevorzugt ≥ 300 µm und ganz besonders bevorzugt ≥ 350 µm.

8. Verfahren nach einem der Ansprüche 1 bis 7, **dadurch gekennzeichnet, dass** die rieselfähige Carbodiimidverbindung zumindest 2 Monate ohne Verbacken gelagert werden kann.

9. Verfahren nach einem der Ansprüche 1 bis 8, **dadurch gekennzeichnet, dass** die rieselfähige Carbodiimidverbindung hilfsstofffrei rieselfähig lagerbar ist.

10. Carbodiimidverbindung, erhältlich durch ein Verfahren gemäß einem der Ansprüche 1-9, **dadurch gekennzeichnet, dass** sie langzeitstabil und rieselfähig ist, und dass sie des weiteren erhältlich ist aus einer partikulären Carbodiimidverbindung durch Lagerung der partikulären Carbodiimidverbindung in einer Masse, Zerkleinern der durch die Lagerung verbackenen Carbodiimidverbindung zu einer zerkleinerten partikulären Carbodiimidverbindung und Sieben der zerkleinerten partikulären Carbodiimidverbindung.

## Claims

1. Method for producing free-flowing carbodiimide compounds, comprising the steps of:
- preparing a particulate carbodiimide compound,
- storing a mass of the particulate carbodiimide compound under a surface pressure of at least 30 g/cm² until the mass of the carbodiimide compound has baked,
- comminuting the baked mass of the carbodiimide compound into a comminuted particulate carbodiimide compound,
- sieving the comminuted particulate carbodiimide compound to remove particles above 4.0 mm in size and particles below 0.1 mm in size from the comminuted particulate carbodiimide compound, whereby a fraction comprising particles of a free-flowing carbodiimide compound having long-term stability is obtained.

2. Method according to Claim 1, **characterized in that** the storage period is from 5 to 30 days, preferably from 7 to 21 days and particularly from 10 to 14 days.

3. Method according to Claim 1 or 2, **characterized in that** the free-flowing carbodiimide compounds are bis(alkylphenyl)carbodiimide compounds.

4. Method according to Claim 3, **characterized in that** the carbodiimide compound is a bis(2,6-diisopropylenephenyl)carbodiimide.

5. Method according to any one of Claims 1 to 4, **characterized in that** particles above 3.0 mm in size, preferably above 2.0 mm in size, and particles below 0.2 mm in size are removed from the comminuted particulate compound in the sieving step.

6. Method according to any one of Claims 1 to 5, **characterized in that** the step of sieving is carried on until particles having one or more grain sizes remain.

7. Method according to any one of Claims 1 to 6, **characterized in that** particles have the following particle size distribution (determined using a Mastersizer 2000, Malvern Instruments, at 4 bar pressure and a concentration of 0.0012% by volume): d_{0,1} ≥ 6 µm, preferably ≥ 7 µm and/or d_{0.5} ≥ 50 µm, preferably ≥ 60 µm and more preferably ≥ 70 µm and/or d_{0.9} ≥ 250 µm, preferably ≥ 300 µm and most preferably ≥ 350 µm.

8. Method according to any one of Claims 1 to 7, **characterized in that** the free-flowing carbodiimide compound is storable without baking for two months at least.

9. Method according to any one of Claims 1 to 8, **characterized in that** the free-flowing carbodiimide compound is storable in the free-flowing state without any excipient.

10. Carbodiimide compound obtainable by a method according to any one of Claims 1-9, **characterized in that** it has long-term stability, is free-flowing and further is obtainable from a particulate carbodiimide compound by storing the particulate carbodiimide compound in a mass, comminuting the carbodiimide compound baked as a result of storage to form a comminuted particulate carbodiimide compound, and sieving the comminuted particulate carbodiimide compound.

## Revendications

1. Procédé pour la préparation de composés de carbodiimide pouvant s'écouler, comprenant les étapes consistant à :
- préparer un composé particulaire de carbodiimide,
- entreposer une masse du composé particulaire de carbodiimide sous une pression surfacique d'au moins 30 g/cm², jusqu'à atteindre une agglomération de la masse du composé de carbodiimide,
- broyer la masse agglomérée du composé de carbodiimide jusqu'à l'obtention d'un composé particulaire broyé de carbodiimide,
- tamiser le composé particulaire broyé de carbodiimide, les particules présentant une grosseur supérieure à 4,0 mm et les particules présentant une grosseur inférieure à 0,1 mm étant séparées du composé particulaire broyé de carbodiimide,
de manière à obtenir une fraction présentant des particules d'un composé de carbodiimide stable à long terme, pouvant s'écouler.

2. Procédé selon la revendication 1, **caractérisé en ce que** la durée d'entreposage est de 5 à 30 jours, de préférence de 7 à 21 jours et en particulier de 10 à 14 jours.

3. Procédé selon la revendication 1 ou 2, **caractérisé en ce que** les composés de carbodiimide pouvant s'écouler sont des composés de bis-(alkylphényl)-carbodiimide.

4. Procédé selon la revendication 3, **caractérisé en ce que** le composé de carbodiimide est un bis-(2,6-diisopropylènephényl)-carbodiimide.

5. Procédé selon l'une quelconque des revendications 1 à 4, **caractérisé en ce que** les particules présentant une grosseur supérieure à 3,0 mm, de préférence supérieure à 2,0 mm et les particules présentant une grosseur inférieure à 0,2 mm sont séparées par tamisage du composé particulaire broyé de carbodiimide.

6. Procédé selon l'une quelconque des revendications 1 à 5, **caractérisé en ce que** le tamisage est poursuivi jusqu'à ce qu'il reste des particules présentant une ou plusieurs grosseurs de grain.

7. Procédé selon l'une quelconque des revendications 1 à 6, **caractérisé en ce que** les particules présentent la répartition granulométrique suivante (déterminée à l'aide d'un Mastersizer 2000, Malvern Instruments, à une pression de 4 bars et une concentration de 0,0012% en volume) : d_{0,1} ≥ 6 µm, de préférence ≥ 7 µm et/ou d_{0,5} ≥ 50 µm, de préférence ≥ 60 µm et de manière particulièrement préférée ≥ 70 µm et/ou d_{0,9} ≥ 250 µm, de préférence ≥ 300 µm et de manière tout particulièrement préférée ≥ 350 µm.

8. Procédé selon l'une quelconque des revendications 1 à 7, **caractérisé en ce que** le composé de carbodiimide pouvant s'écouler peut être entreposé pendant au moins 2 mois sans agglomération.

9. Procédé selon l'une quelconque des revendications 1 à 8, **caractérisé en ce que** le composé de carbodiimide pouvant s'écouler peut être entreposé de manière à pouvoir s'écouler sans adjuvants.

10. Composé de carbodiimide, pouvant être obtenu par un procédé selon l'une quelconque des revendications 1-9, **caractérisé en ce qu'**il est stable à long terme et peut s'écouler et **en ce qu'**il peut en outre être obtenu à partir d'un composé particulaire de carbodiimide par entreposage du composé particulaire de carbodiimide sous forme d'une masse, broyage du composé de carbodiimide aggloméré par l'entreposage de manière à obtenir un composé particulaire broyé de carbodiimide et tamisage du composé particulaire broyé de carbodiimide.
